Europäisches Patentamt

European Patent Office

Office européen des brevets

(19)

(11) Numéro de publication: **0 000 179**
**B1**

(12) **FASCICULE DE BREVET EUROPEEN**

(45) Date de publication du fascicule de brevet:
20.05.81

(51) Int. Cl.³: **F 16 L 1/02**

(21) Numéro de dépôt: **78100212.6**

(22) Date de dépôt: **21.06.78**

(54) **Appareil pour l'assemblage par emboîtement de tuyaux de grand diamètre.**

(30) Priorité. **22.06.77 FR 7719121**

(43) Date de publication de la demande:
**10.01.79 Bulletin 79/1**

(45) Mention de la délivrance du brevet
**20.05.81 Bulletin 81/20**

(84) Etats contractants désignés:
**BE CH GB LU NL SE**

(56) Documents cités:
**CH-A-450 841**
**DE-A-2 524 969**
**US-A-1 571 372**
**US-A-3 061 916**
**US-A-3 486 214**

(73) Titulaire: **MARTINEZ, Louis Georges, 196 Boulevard Faidherbe, F-59400 Cambrai (FR)**

(72) Inventeur: **MARTINEZ, Louis Georges, 196 Boulevard Faidherbe, F-59400 Cambrai (FR)**

(74) Mandataire: **Casalonga, Alain et al, Bureau D.A. Casalonga Lilienstrasse 77, D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 000 179 B1

## Appareil pour l'assemblage par emboîtement de tuyaux de grand diamètre

La présente invention se rapporte à un appareil pour l'assemblage par emboîtement de tuyaux de grand diamètre, en particulier de tuyaux en béton utilisés principalement pour l'assainissement.

La pose de tels tuyaux qui peuvent avoir des diamètres de plusieurs mètres et des masses de quelques tonnes présente des difficultés, notamment lorsque cette pose a lieu dans une fouille. On descend généralement chaque tuyau, ceinturé par une élinque accrochée à une grue, au-dessus du fond de la fouille, de manière que son about mâle se trouve sensiblement en regard de l'about femelle du tuyau posé auparavant. On accroche ensuite un appareil de traction du type à câble à une élingue placée par exemple autour d'un des tuyaux déjà posés. On relie le crochet de l'appareil de traction à l'élingue supportant le tuyau à poser et on eboîte l'about mâle du tuyau à poser dans l'about femelle du tuyau déjà posé en manoeuvrant l'appareil de traction. Pendant toute cette opération le tuyau doit rester suspendu à l'élingue de levage.

Cet emboîtement doit se faire avec une très grande précision, notamment lorsque l'étanchéité entre deux tuyaux successifs est assurée simplement par un joint d'éntanchéité en élastomère introduit avant la pose dans une gorge extérieure de l'about mâle de chaque tuyau. En effet, même si l'on enduit le joint d'étanchéité de l'about mâle du tuyau à poser ainsi que l'about femelle du tuyau déjà posé d'un lubrifiant, par exemple de savon, une très légère excentration de l'about mâle par rapport à l'about femelle peut déjà provoquer un endommagement du joint d'étanchéité lors de la manoeuvre de l'appareil de traction. Il est donc nécessaire de faire appel à plusieurs ouvriers qui, de l'extérieur des tuyaux, guident le tuyau à poser pendant l'emboîtement. Cela présente de graves dangers de blessures auxquels s'ajoutent, lors de la pose en fouille, les risques d'éboulement. Malgré cela, il arrive encore très fréquemment que le joint d'étanchéité soit endommagé, notamment du fait que l'ouvrier manoeuvrant l'appareil de traction est éloigné de la zone d'assemblage et ne peut donc pas suivre l'évolution de l'opération d'emboîtement.

L'emboîtement de deux tuyaux peut également s'effectuer par traction à l'intérieur des tuvaux, à l'aide d'un appareil de traction prenant généralement appui, d'une part, sur un regard placé tous les quarante à soixante mètres dans de telles conduites d'assainissement et, d'autre part, sur un madrier, une barre de fer ou un élément analogue appliqué en travers contre le collet intérieur de butée de l'about femelle du tuyau à poser. Dans ce cas également, il est cependant nécessaire de prévoir des ouvriers supplémentaires pour assurer le guidage du tuyau à poser pendant l'emboîtement, et l'ouvrier manoeuvrant l'appareil de traction est éloigné du tuyau à emboîter.

La pose de tels tuyaux en fouille exige jusqu'à présent l'utilisation d'un premier engin par exemple hydraulique pour creuser la fouille et d'un second engin mécanique pour descendre les tuyaux dans la fouille. Il est en effet interdit de travailler sous une charge suspendue à un engin hydraulique puisqu'une simple rupture de flexible, par exemple, peut provoquer la chute de la charge. Cette nécessité de disposer de deux engins alourdit sensiblement le coût de la pose de tels tuyaux.

On a également déjà proposé des appareils d'emboîtement de tuyaux qui sont mobiles sur un chariot à l'intérieur des tuyaux déjà posés d'une conduite et peuvent être immobilisés par un dispositif de blocage dans un des derniers tuyaux posés, pour servier ainsi de point d'appui à un dispositif de traction agissant sur le prochain tuyau à emboîter. L'appareil suivant le brevet suisse n° 450 841 est cependant très encombrant puisqu'il s'étend sur la longueur de plusieurs tuyaux et sa mise en oeuvre est compliquée. L'appareil suivant le brevet US n° 3 486 214 ne permet pas d'assurer un blocage certain lors de la mise en action du dispositif de traction. Toutefois, le principal inconvénient commun à ces appareils connus réside dans le fait qu'ils ne procurent aucune protection au personnel qui est chargé de la pose des tuyaux et qui doit guider manuellement le tuyau à poser, lors de son eboîtement.

La présente invention a pour objet un appareil qui simplifie l'assemblage par emboîtement de tuyaux de grand diamètre et réduit sensiblement les risques de la pose de tels tuyaux. L'invention a également pour objet un appareil qui permet de réduire le coût de la pose de ces tuyaux.

La présente invention se rapporte donc à un appareil pour l'assemblage par emboîtement de tuyaux de grand diamètre, du type comprenant un chariot susceptible de rouler à l'intérieur du ou des tuyaux déjà posés, un dispositif d'immobilisation dudit chariot dans le dernier tuyau posé, constitué par au moins une jambe de force d'une longueur légèrement supérieure au diamètre intérieur des tuyaux et articulée par un axe horizontal transversal sur ledit chariot de manière à pouvoir être bloquée dans le dernier tuyau posé, ses deux extrémités portant contre la face intérieure de ce tuyau en deux points à peu près diamétralement opposés, et un dispositif de traction monté sur ledit chariot et prenant appui sur le prochain tuyau à poser.

Selon l'invention, la jambe de force porte une voûte articulée par un axe horizontal transversal sur l'extrémité supérieure de la jambe de force et dépassant, sur une partie de sa longueur, l'extrémité libre du dernier tuyau posé lorsque l'appareil est immobilisé au voisinage de cette extrémité. Cette voûte permet, après avoir immobilisé le chariot dans le dernier tuyau posé, de mettre à niveau et de centrer le tuyau à poser par rapport au tuyau déjà posé, ce qui assure l'emboîtement du tuyau à poser dans le tuyau déjà posé par la simple manoeuvre del'appareil de traction. L'articulation de la voûte par un axe horizontal transversal sur la jambe de force permet le pivotement de la voûte par rapport à la jambe de force en vue de l'application correcte contre la face intérieure du dernier tuyau posé, lors du blocage de l'appareil par pivotement de la jambe de force dans un sens, et en vue du déplacement de l'appareil dans les tuyaux, après déblocage de la jambe de force, par pivotement de cette dernière dans le sens opposé.

Afin d'assurer que toute traction exercée par le dispositif de traction renforce avec certitude l'effet de blocage de la jambe de force dans le tuyau, le dispositif de traction est articulé par un axe d'articulation horizontal transversal sur la jambe de force, entre l'axe d'articulation de cette dernière sur le chariot et l'extrémité inférieure de la jambe de force.

Pour simplifier le blocage de la jambe de force, un organe de manoeuvre est monté sur le chariot pour faire pivoter la jambe de force et la bloquer dans le dernier tuyau posé en faisant porter ladite voûte et une semelle articulée sur l'extrémité inférieure de la jambe de force, contre la face intérieure dudit tuyau.

En vue de l'adaptation de l'appareil à des tuyaux de diamètres différents, ladite jambe de force est réglable en longueur.

Pour simplifier la manoeuvre de l'appareil, ce dernier comprend un ressort pour faire pivoter la jambe de force par rapport au chariot à l'encontre de l'action dudit organe de manoeuvre. Dans le même but, l'appareil comprend un ressort de compression entre la jambe de force et la voûte, en avant de l'axe d'articulation de la voûte sur la jambe de force.

D'autres caractéristiques et avantages de l'objet de l'invention apparaîtront à la lecture de la description ciaprès d'un exemple de réalisation non limitatif d'un appareil conforme à l'invention; sur ce dessin:

la fig. 1 est une vue en élévation latérale d'un mode de réalisation de l'appareil conforme à l'invention, à l'intérieur d'un tuyau représenté en coupe longitudinale verticale;

la fig. 2 est une vue prise dans le sens de la flèche II sur la fig. 1.

L'appareil suivant l'invention servant à l'assemblage de deux tuyaux 1, 2, par exemple en béton, comprend un chariot 3 susceptible de rouler à l'intérieur des tuyaux. Le chariot est formé d'un châssis 4, de préférence soudé, porté par deux roues avant 5 et deux roues arrière 6. Les roues sont inclinées vers l'extérieur de manière que les plans desdites roues soient sensiblement perpendiculaires à la tangente au pourtour intérieur du tuyau, au point de contact de chaque roue avec ledit pourtour.

Deux jambes de force 8 télescopiques sont articulées sur le châssis 4, par deux axes d'articulation 7 alignés, horizontaux, perpendiculaires à l'axe ongitudinal du chariot 3, de manière à pouvoir pivoter dans deux plans verticaux longitudinaux du chariot 3. Chaque jambe de force 8 comprend un tronçon tubulaire extérieur 9 articulé par ledit axe 7 sur le châssis 4, un tronçon tubulaire médian 10 dépassant de part et d'autre le tronçon 9 et pouvant coulisser dans ce dernier, ainsi qu'un tronçon intérieur 11 sortant vers le haut du tronçon médian 10. Le tronçon tubulaire 11 comporte des trous transversaux permettant de limiter, à l'aide de goupilles non représentées ou d'organes analogues, la profondeur d'enfoncement du tronçon 11 dans le tronçon 10. Les deux tronçons tubulaires médians 10 sont reliés entre eux, sensiblement à leurs deux extrémités par deux entretoises 12.

Chacun des deux tronçons tubulaires 10 présente, à son extrémité inférieure, une semelle 13 articulée par une rotule sur le tronçon 10.

Deux vérins hydrauliques 14 sont articulés sur l'arrière du châssis 4 suivant des axes d'articulation 15 alignés, horizontaux, perpendiculaires à l'axe longitudinal du chariot 3, de manière à pouvoir pivoter dans les mêmes plans que les jambes de force 8. La tige des piston de chacun de ces vérins 14 est articulée sur le tronçon tubulaire 10, en dessous du châssis 4, sensiblement à l'extrémité inférieure du tronçon 10, par des axes d'articulation 16. Un ressort de traction 17 prolongé par une tige filetée 18 est accroché à chacun des axes 16, l'écrou 19 vissé sur la tige filetée 18 prenant appui sur une patte saillante 20 fixée à l'arrière sur le tronçon tubulaire 9. Le ressort 17 cherche à faire monter le tronçon 10 par rapport au tronçon 9 dans lequel il peut coulisser.

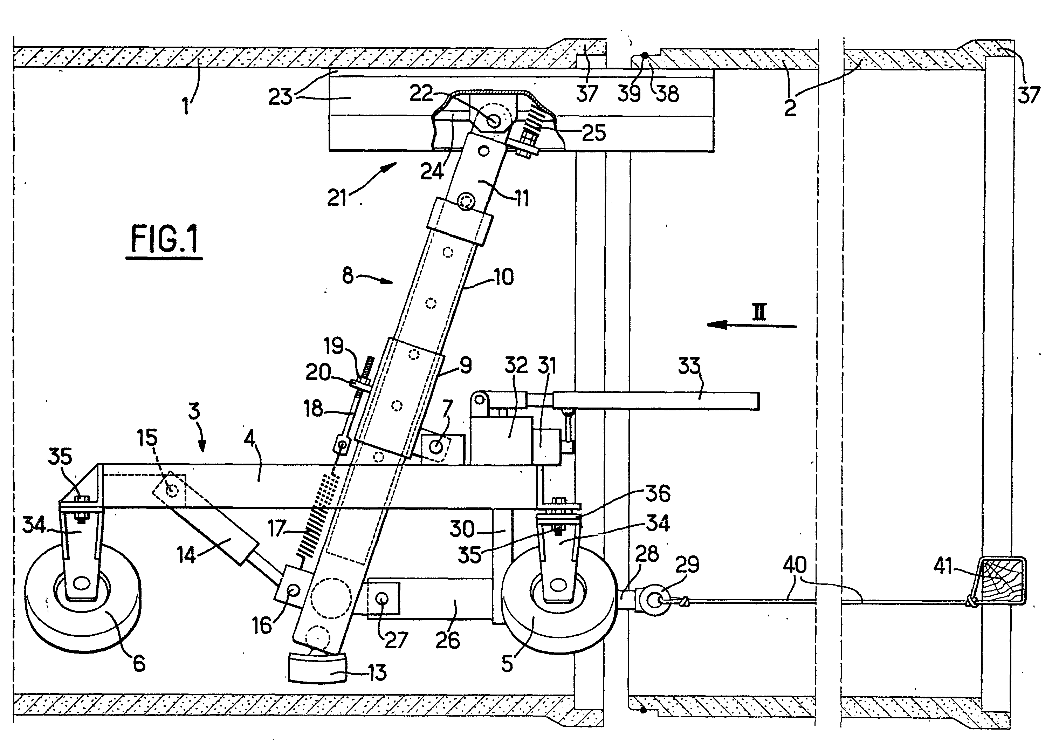

Sur l'extrémité supérieure des deux tronçons tubulaires 11 des jambes de force 8, une voûte 21 est articulée autour de deux axes 22 alignés, transversaux, horizontaux, de manière que ladite voûte puisse pivoter par rapport aux jambes de force 8 dans un plan vertical longitudinal du chariot. La voûte 21 se compose de plusieurs segments courbes 23 articulés les uns sur les autres suivant des axes longitudinaux 24. Les deux tronçons tubulaires 11 sont articulés sur les deux segments extérieures 23 de la voûte. Un ressort de compression 25 est inséré entre l'extrémité supérieure de chaque tronçon tubulaire 11 et la voûte 21, en avant des axes d'articulation 22, de manière que les ressorts 25 cherchent à faire pivoter la voûte 21 dans son ensemble dans le sens contraire des aiguilles d'une montre sur la fig. 1.

Un vérin hydraulique 26 est monté en dessous du châssis 4, dans le plan longitudinal médian du chariot 3. Le vérin 26 est articulé par un axe transversal horizontal 27 sur la traverse inférieure 12. Sa tige de piston 28 qui s'étend vers l'avant se termine par un oeil 29. Le vérin 26 est soutenu dans une position sensiblement horizontale par un étrier 30 fixé en dessous du châssis 4.

La commande des vérins 14 et 26 s'effectue, en passant par un distributeur 31, par une pompe hydraulique 32 commune qui, dans l'exemple représenté, est manoeuvrée manuellement à l'aide d'un levier 33.

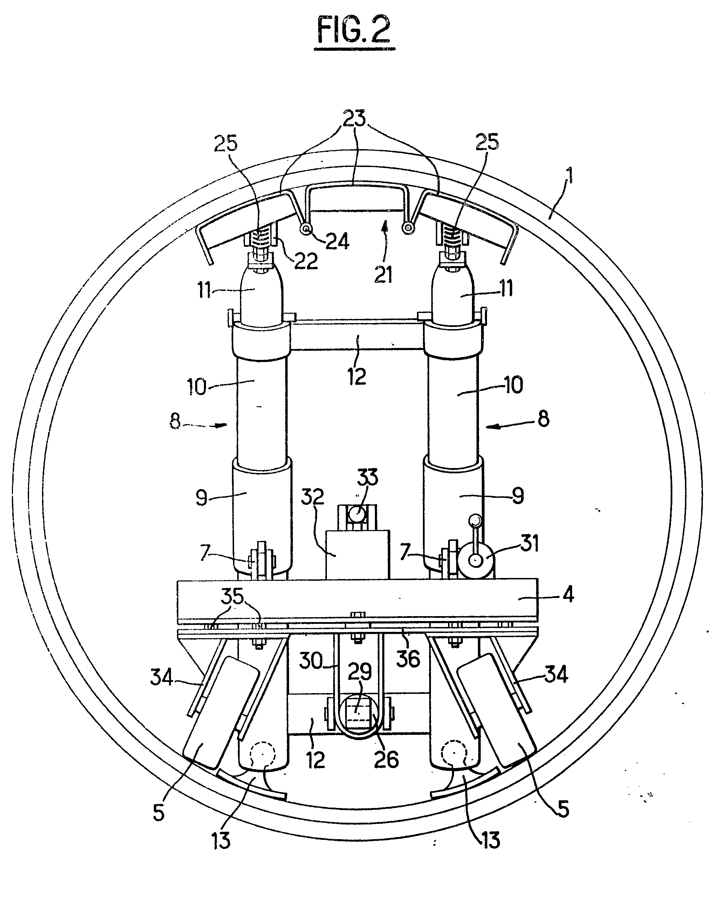

On reconnaît sur la fig. 2 que l'écartement des roues de gauche et de droite (voie) tant à l'avant qu'à l'arrière est réglable, à savoir par le fait que les chapes 34 portant les roues peuvent être fixées avec des écartements variables sur le châssis 4, par exemple à l'aide de boulons 35. Par ailleurs, les roues avant 5 sont orientables par le fait que leurs chapes 34 sont fixées sur un support commun 36 articulé par un unique boulon central sur le châssis 4. Cette orientation des roues avant peut être avantageuse par exemple pour déplacer le dispositif à l'extérieur de tuyaux.

On va décrire ci-après le mode de pose de tuyaux à l'aide du dispositif conforme à l'invention, en vue de mieux faire comprendre le fonctionnement de ce dernier.

Le tuyau 1 constitue le dernier tuyau posé d'une série de tuyaux, par exemple en béton, constituant une conduite d'un système d'assainissement. Il s'agit dans le cas représenté d'assembler un autre tuyau 2 avec le tuyau 1.

De façon usuelle, chacun des tuyaux 1, 2 comporte un about femelle 37 à collet et un about mâle 38 destiné à être emboîté dans l'about femelle 37. L'about mâle 38 porte un joint d'étanchéité 39 en élastomère posé dans une gorge prévue sur l'about mâle 38.

L'appareil vonforme à l'invention, placé à l'intérieur du tuyau 1, est avancé en direction de l'extrémité libre de ce dernier, en l'occurrence en direction de l'about femelle 37, de manière que ses roues avant 5 se trouvent à proximité de l'about femelle 37. La longueur hors tout des jambes de force 8 est réglée de manière qu'elle soit quelque peu supérieure au diamètre des tuyaux. Pendant cette mise en position, les vérins 14 ne sont pas sous pression et les jambes de force 8 occupent une position plus inclinée par rapport à la verticale que sur la fig. 1, sous l'action des ressorts 17. Les semelles 13 et la voûte 21 ne sont passen contact avec la face interne du tuyau 1.

On manoeuvre ensuite la pompe 32 pour envoyer à l'aide du distributeur 31 de l'huile sous pression dans les vérins 14 dont la tige de piston 15 se dégage ainsi du cylindre. Cela imprime aux jambes de force 8 un mouvement de pivotement dans le sens contraire des aiguilles d'une montre sur la fig. 1, autour de l'axe d'articulation 7. De ce fait, les semelles 13, d'une part, et la voûte 21, d'autre part, sont appuyées en deux points plus ou moins diamétralement opposés contre la face interne du tuyau 1, ce qui bloque l'appareil par rapport au tuyau 1, la voîte 21 dépassant l'about femelle 37 sur une partie de sa longueur.

On amène ensuite le tuyau 2, suspendu par exemple à une élingue, son about mâle 38 étant tourné vers l'about femelle 37 du tuyau 1, depuis le haut et depuis la droite sur la fig. 1, dans l'alignement du tuyau 1, de manière que la partie supérieure de son l'about mâle 38 vienne porter par sa face interne sur la voûte 21. On fixe à l'oeil 29 de la tige de piston 28 du vérin 26 une extrémité d'un câble 40 dont l'autre extrémité est assujettie à un élément de contreappui 41, par exemple un madrier ou une barre de fer, placé en travers dans le collet de l'about femelle 37 du tuyau 2. Par envoi d'huile sous pression de la pompe 32, en passant par le distributeur 31, dans le vérin 26, le tuyau 2, maintenu centré par rapport au tuyau 1 grâce à son appui sur la voûte 21, est poussé en direction du tuyau 1 jusqu'à ce que son about mâle 38 s'emboîte dans l'about femelle 37 du tuyau 1. Ce centrage assure une introduction correcte du joint d'étanchéité 39 dans le collet de l'about femelle 37 du tuyau 1, d'où un assemblage parfaitement étanche des deux tuyaux 1 et 2.

Après emboîtement du tuyau 2 dans le tuyau 1 et après calage du tuyau 2, on relache la pression dans le cylindre 26, pour pouvoir décrocher le câble de traction 40, et dans les cylindres 14 pour débloquer l'appareil suivant l'invention. On fait alors avancer cet appareil dans le tuyau 2 venant d'être posé, jusqu'à proximité de l'about femelle 37 de ce dernier. On bloque l'appareil à cet endroit et on procède à la pose du tuyau suivant de la manière que vient d'être décrite.

Il y a lieu de noter que la personne manoeuvrant l'appareil se trouve à proximité immédiate de la zone d'emboîtement des deux tuyaux et peut donc, à elle seule, parfaitement surveiller l'opération d'emboîtement. Cette personne peut, de préférence, pénétrer dans le tuyau à poser dès que ce dernier est par exemple descendu dans la fouille et se trouve à proximité au-dessus du fond de cette dernière. Elle reste ensuite toujours à l'intérieur du tuyau à poser, donc à l'abri de tout risque d'éboulement de la fouille. Par ailleurs, une éventuelle chute du tuyau à poser n'aurait, à partir de ce moment, plus de conséquence fâcheuse puisque la hauteur de chute serait faible et la personne se trouvant à l'intérieur du tuyau pourrait la supporter sans aucun dommage. Pour cette raison, il devient même possible de poser de tels tuyaux à l'aide d'engins hydrauliques. Cela est interdit jusqu'à présent par suite de la présence obligatoire d'ouvriers dans la fouille, en dessous du tuyau à poser, pour guider ce dernier en cours d'emboîtement, ce qui implique toujours l'utilisation d'un premier engin par exemple hydraulique pour creuser la fouille et d'un second engin mécanique pour descendre le tuyau dans la fouille.

Il y a lieu de noter que l'appareil conforme à l'invention est conçu de manière à laisser dégagé le centre des tuyaux pour permettre le passage d'un rayon laser untilisé comme moyen de guidage pour la pose de conduites composées de tuyaux emboîtés.

Il va de soi qu'il est possible de remplacer la plupart des éléments de l'appareil tel que décrit ci-dessus et représenté sur le dessin annexé par des éléments équivalents sans pour autant sortir du cadre de l'invention.

## Revendications

1. Appareil pour l'assemblage par emboîtement de tuyaux de grand diamètre, comprenant un chariot (3) susceptible de rouler à l'intérieur du ou des tuyaux déjà posés, un dispositif d'immobilisation dudit chariot (3) dans le dernier tuyau posé, constitué par au moins une jambe de force (8), d'une longueur légèrement supérieure au diamètre intérieur des tuyaux et articulée par un axe (7) horizontal transversal sur ledit chariot (3) de manière à pouvoir être bloquée dans le dernier tuyau posé, ses deux extrémités portant contre la face intérieure de ce tuyau en deux points à peu près diamétralement opposés, et un dispositif de traction (26, 28) monté sur ledit chariot (3) et prenant appui sur le prochain tuyau à poser, caractérisé par le fait que la jambe de force (8) porte une voûte (21) articulée par un axe horizontal transversal (22) sur l'extrémité supérieure de la jambe de force et dépassant, sur une partie de sa longueur, l'extrémité libre du dernier tuyau posé (1) lorsque l'appareil est immobilisé au voisinage de cette extrémité.

2. Appareil suivant la revendication 1, caractérisé par le fait que ledit dispositif de traction (26, 28) est articulé par un axe d'articulation horizontal transversal (27) sur la jambe de force (8), entre l'axe d'articulation (7) de cette dernière sur le chariot (3) et l'extrémité inférieure de la jambe de force.

3. Appareil suivant la revendication 1 ou 2, caractérisé par le fait qu'un organe de manoeuvre (14) est monté sur le chariot (3) pour faire pivoter la jambe de force (8) et la bloquer dans le dernier tuyau posé (1) en faisant porter ladite voûte (21) et une semelle (13) articulée sur l'extrémité inférieure de la jambe de force, contre la face intérieure dudit tuyau (1).

4. Appareil suivant l'une quelconque des revendications précédentes, caractérisé par le fait que ladite jambe de force (8) est réglable en longueur en vue de l'adaptation à des tuyaux de diamètres différents.

5. Appareil suivant la revendication 3, caractérisé par le fait qu'il comprend, en outre, un ressort (17) pour faire pivoter la jambe de force (8) par rapport au chariot (3) à l'encontre de l'action dudit organe de manoeuvre (14).

6. Appareil suivant la revendication 1, caractérisé par le fait qu'il comprend, en outre, un ressort de compression (25) entre la jambe de force (8) et la voûte (21), en avant de l'axe d'articulation (22) de la voûte (21) sur la jambe de force (8).

7. Appareil suivant l'une quelconque des revendications précédentes, caractérisé le fait qu'il comprend deux jambes de force (8) placées côte a côte, reliées entre elles et articulées sur le chariot (3) par deux axes d'articulation (7) alignés.

8. Appareil suivant la revendication 7, caractérisé par le fait que chaque jambe de force (8) porte, à son extrémité inférieure, une semelle à rotule (13).

9. Appareil suivant la revendication 7 ou 8, caractérisé par le fait que la voûte (21) se compose de plusieurs segments courbes (21) articulés les uns sur les autres par des axes d'articulation longitudinaux (24) et que chacun des deux segments extérieurs de la voûte est articulé par un axe horizontal transversal (22) sur l'extrémité supérieure de l'une des deux jambes de force.

10. Appareil suivant l'une quelconque des revendications précédentes, caractérisé par le fait que les roues (5, 6) situées sur les deux côtés opposés du chariot (3) sont inclinés vers l'extérieur et que la voie des roues (5, 6) est réglable.

## Patentansprüche

1. Gerät zur Montage von Rohren mit großem Durchmesser durch Ineinanderstecken mit einem Wagen (3), der im Inneren des oder der bereits verlegten Rohre verfahrbar ist, mit einer Vorrichtung zur Verankerung des Wagens (3) im letztverlegten Rohr, bestehend aus wenigstens einer Strebe (8), die etwas länger ist als der Innendurchmesser der Rohre und mittels einem waagerechten Querbolzen (7) am Wagen (3) angelenkt ist, so daß sie in dem letztverlegten Rohr verspreizbar ist, wobei sich ihre beiden Enden an zwei etwa diametral gegenüberliegenden Punkten gegen die Innenfläche dieses Rohres abstützen, sowie mit einer auf dem Wagen (3) montierten Zugvorrichtung (26, 28), die an dem nächsten zu verlegende Rohr angreift, dadurch gekennzeichnet, daß die Strebe (8) ein an ihrem oberen Ende durch einen waagerechten Querbolzen (22) angelenktes gewölbtes Stützteil trägt, das über einen Teil seiner Länge das freie Ende des letzten verlegten Rohres (1) überragt, wenn das Gerät in der Nähe dieses Endes verankert ist.

2. Gerät gemäß Anspruch 1, dadurch gekennzeichnet, daß die Zugvorrichtung (26, 28) mit einem waagerechten Querbolzen (27) an der Strebe (8) zwischen dem Anlenkbolzen (7) letzterer auf dem Wagen (3) und dem unteren Ende der Strebe (8) angelenkt ist.

3. Gerät gemäß Anspruch 1 oder 2, dadurch gekennzeichnet, daß ein Stellelement (14) zum Schwenken der Strebe (8) und zum Verpreizen derselben im letztverlegten Rohr (1), zwecks Anlage des gewölbten Stützteils und einer am unteren Ende der Strebe (8) angelenkten Stützplatte (13) gegen die Innenfläche des Rohrs (1), auf dem Wagen (3) montiert ist.

4. Gerät gemäß einem der vorhergehenden Ansprüche, dadurch gekennzeichnet, daß die Strebe (8) in der Länge einstellbar ist zwecks Anpassung an Rohre unterschiedlichen Durchmessers.

5. Gerät gemäß Anspruch 3, dadurch gekennzeichnet, daß es ferner eine Feder (17) aufweist, um die Strebe (8) entgegen der Wirkung des Stellelements (14) gegenüber dem Wagen (3) zu schwenken.

6. Gerät gemäß Anspruch 1, dadurch gekennzeichnet, daß es ferner eine Druckfeder (25) zwischen der Strebe (8) und dem gewölbten Stützteil (21) vor dem Anlenkbolzen (22) des gewölbten Stützteils (21) an der Strebe (8) aufweist.

7. Gerät gemäß einem der vorhergehenden Ansprüche, dadurch gekennzeichnet, daß es zwei Streben (8) enthält, die nebeneinander angeordnet und miteinander verbunden sind und auf dem Wagen (3) mittels zwei ausgerichteten Gelenkbolzen (7) angelenkt sind.

8. Gerät gemäß Anspruch 7, dadurch gekennzeichnet, daß jede Strebe (8) an ihrem unteren Ende eine mittels eines Kugelgelenks angelenkte Stützplatte (13) trägt.

9. Gerät gemäß Anspruch 7 oder 8, dadurch gekennzeichnet, daß das gewölbte Stützteil (21) aus mehreren gewölbten Segmenten (21) zusammengesetzt ist, die durch Längsgelenkbolzen (24) aneinander angelenkt sind und daß jedes der beiden Außensegmente des Stützteils (21) mittels eines waagerechten Querbolzens (22) am oberen Ende einer der beiden Streben (8) angelenkt ist.

10. Gerät gemäß einem der vorhergehenden Ansprüche, dadurch gekennzeichnet, daß die Räder (5, 6) an den beiden gegenüberliegenden Seiten des Wagens (3) nach außen geneigt sind und die Spur der Räder (5, 6) einstellbar ist.

## Claims

1. An appliance for spigot and sockel joining of large diameter pipes, comprising a carriage (3) capable of travelling inside the pipe or pipes already laid, consisting of at least one strut (8), slightly longer than the inside diameter of the pipes and hinged by a transverse horizontal pin (7) on the said carriage (3) in such a manner as to be capable of being locked in the last pipe laid, with its two ends bearing against the inner face of this pipe at two points roughly diametrically opposite, and a traction device (26, 28) installed on the said carriage (3) and acting on the next pipe to be laid, characterized by the fact that the strut (8) carries an arch (21) hinged by a transverse horizontal pin (22) on the upper end of the strut and with part of its length projecting beyond the free end of the last pipe laid (1) when the applicance is locked near to this end.

2. The appliance according to Claim 1, characterized by the fact that the said traction device (26, 28) is hinged by a transverse horizontal pin hinge-pin (27) on the strut (8) between the pin (7) hinging this latter on the carriage (3) and the lower end of the strut.

3. The appliance according to Claims 1 or 2, characterized by the fact that a control component (14) is fitted on the carriage (3) to pivot the strut (8) and lock it into the last pipe laid (1) to cause the said arch (21) and a shoe (13) hinged on the lower end of the strut to bear against the inside face of the said pipe (1).

4. The appliance according to any one of the previous claims, characterized by the fact that the said strut (8) can be adjusted for length to fit pipes of various diameters.

5. The appliance according to Claim 3, characterized by the fact that it comprises, in addition, a spring (17) to pivot the strut (8) with respect to the carriage (3) in opposition to the acton of the said control component (14).

6. The appliance according to Claim 1, characterized by the fact that it comprises, in addition, a compression spring (25) between the strut (8) and the arch (21), in front of the pin (22) hinging the arch (21) on the strut (8).

7. The appliance according to any one of the previous claims, characterized by the fact that it comprises two struts (8) placed side by side, connected together and hinged on the carriage (3) by two aligned hinge-pins (7).

8. The appliance according to Claim 7, characterized by the fact that each strut (8) carries a swivel shoe (13) on its lower end.

9. The appliance according to Claims 7 or 8, characterized by the fact that the arch (21) consists of several curved segments (21) hinging on each other through longitudinal hinge-pins (24) and that each of the two outer segments of the arch is hinged by a transverse horizontal pin (22) on the upper end of one of the two struts.

10. The appliance according to any one of the previous claims, characterized by the fact that the wheels (5, 6) located on the two opposite sides of the carriage (3) are inclined outwardly and that the track of the wheels (5, 6) is adjustable.

FIG.1

0 000 179

# FIG.2